# EUROPEAN PATENT SPECIFICATION

(11) **EP 2 798 501 B1**
(45) Date of publication and mention of the grant of the patent: **30.12.2020**
(21) Application number: 13706810.2
(22) Date of filing: 07.02.2013
(51) Int. Cl.: G06F 12/123

(54) **DATA MIGRATION FOR COMPOSITE NON-VOLATILE STORAGE DEVICE**
DATENMIGRATION FÜR NICHTFLÜCHTIGE SPEICHERVORRICHTUNG
MIGRATION DE DONNÉES POUR DISPOSITIF DE STOCKAGE NON VOLATIL COMPOSITE

(30) Priority: 16.02.2012 US 201261599927 P; 16.02.2012 US 201261599930 P; 06.09.2012 US 201213605916
(43) Date of publication of application: 05.11.2014
(73) Proprietor: Apple Inc., Cupertino CA 95014 (US)
(72) Inventor: WANG, Wenguang, Cupertino, California 95014 (US); MACKO, Peter, Cupertino, California 95014 (US)
(74) Representative: Lang, Johannes
(86) International application number: PCT/US2013/025224
(87) International publication number: WO 2013/122818

(56) References cited:
- US-A1- 2003 005 223
- US-A1- 2006 069 876
- US-A1- 2006 069 876
- US-A1- 2007 124 560
- US-A1- 2008 021 853
- US-A1- 2011 276 744
- US-A1- 2011 276 744
- US-A1- 2011 276 781
- US-A1- 2011 276 781
- US-A1- 2012 017 043

## Description

US 2011/276744 A1 discloses using flash memory, RAM-based data structures and mechanisms to provide a flash store for caching data items (e.g., key-value pairs) inflash pages. A RAM-based index maps data items to flash pages, and a RAM-basedwrite buffer maintains data items to be written to the flash store, e.g., when a full page can be written. A recycle mechanism makes used pages in the flash store available by destaging a data item to a hard disk or reinserting it into the write buffer, based on its access pattern. The flash store may be used in a data deduplication system, in which the data items comprise chunk-identifier, metadata pairs, in which each chunk-identifiercorresponds to a hash of a chunk of data that indicates. The RAM and flash are accessed with the chunk-identifier (e.g., as a key) to determine whether a chunk is anew chunk or a duplicate. US2007/124560 provide methods and systems for efficiently tracking evicted or non-resident pages. US2008/021853 provides a system and program for using multiple data structures to manage data in cache.

### BACKGROUND OF THE INVENTION

The present invention relates to methods for managing storage of data in a composite non-volatile memory that is a composite of a slow memory device and a fast memory device. In a composite disk system, a large, slow, and inexpensive magnetic hard drive can be combined with a small, fast but expensive storage device, such as a solid state drive to form a logical volume. This can provide the advantage of fast access through the solid state drive (SSD) while providing the large capacity of the magnetic hard disk drive (HDD). Prior techniques for managing such a composite disk have used algorithms such as a least recently used (LRU) algorithm or a CLOCK algorithm or the ClockPro algorithm described by Song Jiang. These prior techniques can improve the allocation of the data between the fast and the slow portions of the composite disk, but they tend to not be space efficient, in that they require large amounts of main memory, such as large amounts of DRAM, in order to implement the data structures used in these techniques for allocating data between the two parts of the composite disk. Hence there is a need for an improved, space efficient technique, which does not require as much memory to store the data structures used in allocating or migrating data between the two or more components of the composite disk.

### SUMMARY OF THE DESCRIPTION

The invention is defined by the independent claims. The dependent claims define advantageous embodiments. In one embodiment, a method for managing access to a fast non-volatile storage device, such as a solid state device, and a slower non-volatile storage device, such as a magnetic hard drive, can include maintaining a first data structure which indicates a recency of access to each unit in a set of units in the fast non-volatile storage device, such as the SSD device and also maintaining a second data structure that indicates whether or not units or blocks in the slower storage device, such as the HDD device, have been referenced recently (such as the units or blocks that have been referenced only once recently). In one embodiment, the second data structure can be a probabilistic hash table, which is space efficient, and reduces the required memory overhead. The probabilistic hash table is correct most of the time with respect to whether a unit or block in the slower storage device has been referenced recently, but is not guaranteed to always provide a correct answer.

Other features of the present invention will be apparent from the accompanying drawings and from the detailed description, which follows.

The above summary does not include an exhaustive list of all aspects of the present invention. It is contemplated that the invention includes all systems and methods that can be practiced from all suitable combinations of the various aspects summarized above, and also those disclosed in the Detailed Description below.

### BRIEF DESCRIPTION OF THE DRAWINGS

The present invention is illustrated by way of example, and not limitation, in the figures of the accompanying drawings in which like references indicate similar elements.
**Figure 1** shows an example of a data processing system, which may be employed with an embodiment of the present invention.
**Figure 2** shows an example of a composite non-volatile memory according to one embodiment of the present invention.
**Figure 3** shows an example of a data structure for an algorithm, which may be referred to as a clock algorithm.
**Figure 4** shows an example of a data structure, such as a ghost table, which can be used with one or more methods described herein according to one embodiment of the present invention.
**Figure 5** is a flowchart, which depicts a method according to at least one embodiment of the present invention.
**Figure 6** is a flowchart, which depicts a method according to at least one embodiment of the present invention.
**Figure 7** is a flowchart, which depicts a method according to one embodiment of the present invention.
**Figure 8** shows an example of a Bloom filter data structure, which may be used with at least one embodiment of the present invention.
**Figure 9** is a flowchart, which shows a method according to one embodiment of the present invention.
**Figure 10** is a flowchart, which shows a method according to one embodiment of the present invention.

### DETAILED DESCRIPTION

Approaches to improving the management of a composite, non-volatile data storage device are described. Various embodiments and aspects of the invention will be described with reference to details discussed below, and the accompanying drawings will illustrate the various embodiments. The following description and drawings are illustrative of the invention and are not to be construed as limiting the invention. Numerous specific details are described to provide a thorough understanding of various embodiments of the present invention. However, in certain instances, well-known or conventional details are not described in order to provide a concise discussion of embodiments of the present invention.

Reference in the specification to "one embodiment" or "an embodiment" means that a particular feature, structure, or characteristic described in conjunction with the embodiment can be included in at least one embodiment of the invention. The appearances of the phrase "in one embodiment" in various places in the specification do not necessarily all refer to the same embodiment. The processes depicted in the figures that follow are performed by processing logic that comprises hardware (e.g. circuitry, dedicated logic, etc.), software (as instructions on a non-transitory machine-readable storage medium), or a combination of both. Although the processes are described below in terms of some sequential operations, it should be appreciated that some of the operations described may be performed in a different order. Moreover, some operations may be performed in parallel rather than sequentially.

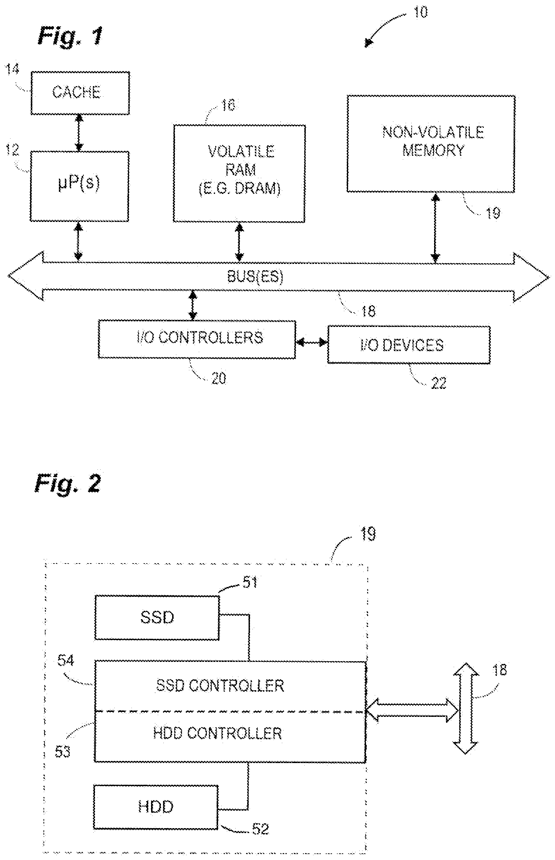

**Figure 1** shows an example of a computing system 10, which is a form of a data processing system, which can be employed with one or more embodiments described herein. The system 10 can be a desktop computer system or a laptop computer system or a Smartphone, or some other electronic devices or consumer electronic devices. The system 10 can include one or more microprocessors or other logic units 12 coupled to an optional cache 14 which in one embodiment can be SRAM, as known in the art. The one or more microprocessors 12 are coupled to the rest of the system through one or more buses 18, which couple the one or more microprocessors 12 to main memory, which can be volatile RAM 16. In one embodiment, volatile RAM can be the conventional DRAM used in computer systems, where the DRAM is coupled through the bus to the rest of the components in the system 10. The system 10 can also include one or more input/output controllers 20, which couple one or more input/output devices 22 to the rest of the system through the one or more buses 18. The system 10 also includes a non-volatile memory 19 which can be a composite disk, such as a combination of flash memory, which is a form of a solid state, drive and a conventional magnetic hard drive.

**Figure 2** shows an example of a composite disk according to one embodiment. The non-volatile memory 19 includes a solid state drive 51 and a magnetic hard drive 52 which can be treated as a single logical volume, or block device by a file system and an operating system and are controlled by one or more controllers, such as controller 54 which includes a solid state drive controller, and controller 53 which includes a hard disk drive controller. The one or more controllers couple the composite drive shown in **Figure 2** to the rest of the components in system 10 through the bus 18. It will be appreciated that flash memory is one form of a fast non-volatile storage device and that other fast storage devices can alternatively be used in conjunction with a slower storage device which can be a conventional magnetic hard drive or other non-volatile storage devices which are slower than the faster storage device. It will be understood that in this description a reference to SSD or HDD will be construed to mean the faster and the slower non-volatile storage devices and will not be construed as being limited to, or specific to any storage device technology.

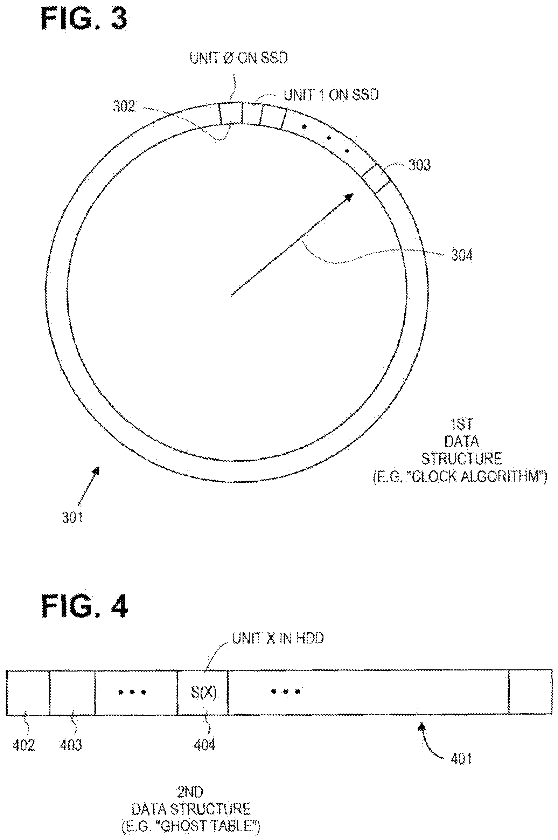

**Figure 3** shows an example of a first data structure, which is used in conjunction with a clock algorithm according to one embodiment of the present invention. The clock algorithm in one embodiment can be similar to the prior clock algorithms, which are used, in the prior art. The clock algorithm can use the data structure 301 which can be a circular queue that includes a clock pointer 304, which points to a particular location in the queue based upon the clock algorithm. Each location in the circular queue corresponds to a particular unit in the fast non-volatile memory device; such as the solid state drive implemented through a flash memory system. In a sense, the first data structure is similar to a block allocation bit map maintained by a file system which indicates which blocks are free and which blocks are allocated (not free) on a hard drive.

For example, location 302 corresponds to unit zero on the SSD and the next unit to the right corresponds to unit one on the SSD, and location 303 corresponds to another unit on the SSD. Each location stores a value indicating the state of the corresponding storage unit within the SSD. In one embodiment two-bit value can be used, such that a value of zero can indicate that the one or more blocks or other components in a particular unit on the SSD is free while the value of one in a location can indicate that a particular unit on the SSD has not been referenced recently and a value of two can indicate that that unit in the SSD has been referenced recently. A value of three can indicate that a unit is pinned to the SSD, and cannot be demoted to the HDD. Alternatively, in one embodiment, a three-bit value can be used which can track the specific number of accesses to a unit. In this embodiment, a zero value can also indicate that the unit is free; a value of one can indicate that the unit has not been referenced recently, and the maximum value of seven can indicate that the unit is pinned. Other values can indicate the number of times a unit has been recently referenced, such as a value of six, which would indicate five recent references.

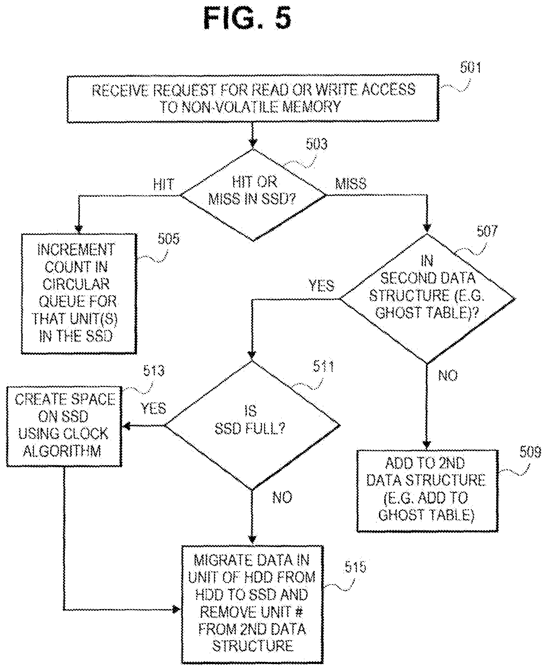

In one embodiment, the first data structure 301 can be managed as follows. When the algorithm needs to find a candidate to demote from the SSD to the HDD, it will use the clock pointer 304. In one embodiment, the clock pointer 304 will sweep from one unit to the next unit in a clockwise direction, until it finds a unit with value of one, which means the unit has not been referenced recently. In one embodiment, the clock pointer 304 can sweep in a counter-clockwise direction. If the value in the unit is the maximum value, then the unit is pinned to the SSD and cannot be demoted to the HDD. If the value is larger than one, but is not the maximum value, the value is decremented by one, down to a minimum value of one, before the clock pointer moves to the next unit. When a particular unit in the SSD is accessed, a counter in the location corresponding to that unit on the SSD will be incremented. Using this method, frequently accessed units on the SSD will attain increasingly higher counts in the unit of the data structure corresponding to that unit on the SSD, up to a preset count limit. However, as the clock pointer 304 sweeps from unit to unit each time a candidate for demotion is required, a count in each sequential unit (e.g. 302, 303) will decrement each time the clock pointer 304 passes that unit, down to a minimum value of one, which indicates that the unit has not been recently accessed. Further details in connection with the use of the clock algorithm relative to the second data structure, which will be next described, are provided in conjunction with **Figures 5****,** **6****,** and **7****.**

**Figure 4** shows an example of a second data structure, which can be referred to as a ghost table, which is used to keep track of accesses of units on the slower non-volatile memory, such as the HDD, for accesses that exceed more than one recent access or more than a predetermined number of recent accesses. In one embodiment, the second data structure can be the same size in terms of the number of locations in the data structure as the number of units in the SSD or it can be proportional to the size of the number of units in SSD. In one embodiment, a signature value for a particular unit number in the HDD can be stored in each location of the second data structure. The unit, in one embodiment, can be a logical block on the magnetic hard drive from the perspective of the file system. The second data structure 401 includes three locations 402, 403, and 404 as well as other locations, and each of those locations can store a signature of a unit number in the HDD. Location 404 shows an example of a signature value for the unit X in the HDD indicating that data in that unit on the HDD has been recently accessed (through either a read or write) at least once or at least a predetermined number of times.

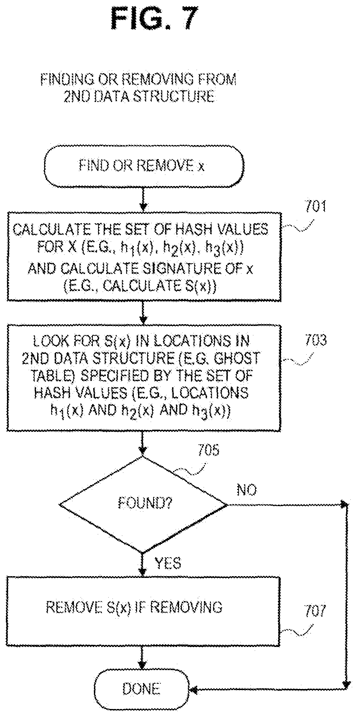

**Figure 5** shows an example of a method according to one embodiment of the present invention for utilizing the first data structure, such as the data structure 301 and the second data structure, such as the data structure 401 to control the migration of data between the fast storage device, such as the SSD and the slower storage device, such as the HDD. The method of **Figure 5** can begin in operation 501 in which the system receives a request for a read or write access to a non-volatile memory. In one embodiment, a file system controls the composite disk and treats the composite disk as a single logical volume. The file system or another component in the data processing system then proceeds to determine how to allocate the data between the two or more portions of the composite disk using the method shown in **Figure 5****.** In response to the receipt of the request for a read or write access, the method proceeds to operation 503 in which it determines whether or not the requested data is in the faster storage device. If it is in the faster storage device then there is a hit in the SSD, in which case processing proceeds to operation 505 in which the count in the circular queue, such as the data structure 301, for the unit found on the SSD, is incremented by one. This is done without moving the clock pointer 304. In this manner, the clock algorithm, through the first data structure, keeps track of the number of accesses to the units in the SSD. If operation 503 determines there is a miss in the SSD, then the system proceeds to operation 507 in which it determines whether or not the data is in a second data structure, such as the ghost table 401 shown in **Figure 4****,** which is in the form of a probabilistic hash table. Finding data in the second data structure is illustrated in Figure 7, which is discussed below.

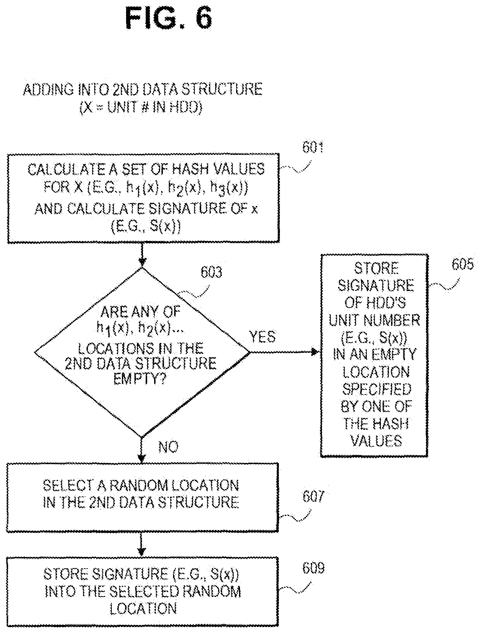

If operation 507 determines that the unit is not already in the second data structure then it proceeds to operation 509 in which the unit number or a representation of the unit number is added to the second data structure which can be the ghost table 401. Further information concerning operation 509 is provided in connection with **Figure 6** which will be described below. If in operation 507 it is determined that the unit containing the requested data is already in the second data structure, then processing proceeds from operation 507 to operation 511 in which it is determined whether or not the fast storage device is full. If it is not full, then operation 515 follows. Various conventional algorithms can be used to determine whether or not the SDD is not full and they do not need to rely upon the use of the clock algorithm or the first data structure 301.

In operation 515, data in the unit of the HDD that is being accessed is migrated from the HDD to the SDD using techniques, which are known in the art. Further, the unit number for that unit of data that has been migrated or is to be migrated is removed from the second data structure, such as the ghost table 401. If in operation 511 the system determines that the SSD is full, then operation 513 precedes operation 515. It will be appreciated that the file system will still maintain conventional data structures indicating the locations of various data in response to the migration of the data in operation 515. In operation 513, the system creates space on the SSD using, in one embodiment, the clock algorithm. In this case, the clock algorithm uses the clock pointer 304 to move sequentially through the circular queue, starting with the current position of the clock pointer to a position which indicates a unit in the SSD that has not been recently referenced; in one embodiment, this is indicated by the value of one stored in a location in the circular queue. As the clock pointer 304 is moved through the circular queue in a circular fashion, the value in each location is decremented by one. As the clock pointer 304 moves through the queue decrementing the values in each location, eventually one of the units will receive a value indicating it is an available unit. Once the clock algorithm determines a next available unit location in the SSD, then the data in that unit of the SSD can be flushed to the HDD and the accessed data on the HDD can be migrated from the HDD to that location or unit in the SSD in operation 515 which can follow operation 513. The removal of a unit number from the second data structure is further described in conjunction with **Figure 7****.**

**Figure 6** shows an example of a method for adding data into the second data structure, where X can represent a unit number in the HDD, such as one or more logical blocks on a hard drive. It can be appreciated that the methods of **Figures 6** and **7** allow for the creation of a probabilistic hash table, which can be the data structure 401 shown in **Figure 4****.** The probabilistic hash table may not be always correct with respect to the number of accesses of a unit on the HDD due to the fact that hashes and signatures are used in creating values stored in the second data structure, and that hashes and signatures are also used to specify locations within that data structure. When hashes are used, it is possible for more than one input into the hash function to return the same hash value. This means that a unit sharing the same signature as a different unit may be promoted to the SSD instead of the proper unit. However, the likelihood of that occurrence is small. Accordingly, though the hash table may not be always correct with respect to the number of access a unit on the HDD has received, the data structure is correct most of the time, and is space efficient in that it can store a large volume of information relative to the amount of memory consumed.

The method shown in **Figure 6** can be implemented in operation 509 of **Figure 5****.** In operation 601, the system calculates a set of hash values for the unit number in the HDD that is being accessed by either a read request or a write request. The set of hash values can be derived from a set of different hash functions. For example, in one embodiment, three different hash functions, hi, h2, and h3 can be used, though any number of hash functions greater than or equal to one can be used. In addition, operation 601 calculates a signature of X which can be represented as S(X) where S represents a signature of the value of X. The signature can be derived from a cryptographic algorithm or from other algorithms, which attempt to create a relatively unique value for a given input but are not guaranteed to create a unique value for each possible value of X. This lack of global uniqueness contributes to the probabilistic nature of the hash table. After the values are calculated in operation 601, the system proceeds to operation 603 in which it determines whether any of the locations specified by the hash values are empty in the second data structure. In other words, each of those locations specified by the hash values is examined in the ghost table, in one embodiment, to determine whether or not they are empty. If any one of them is empty, then operation 605 follows in which the signature, such as S(X) of the HDD's unit number is stored in one of those empty locations specified by one of the hash values. On the other hand, if operation 603 determines that none of those locations are empty, then operation 607 is performed in which a random location in the second data structure is randomly selected in operation 607 and in operation 609 the signature is stored in the selected random location. The use of a random location can cause the overwriting of a prior signature stored in that location.

**Figure 7** shows an example of a method for either finding or removing data from the data structure. When the method of **Figure 7** is used for finding, operation 707 is not performed. The method shown in **Figure 7** for finding can be performed in operation 507 of **Figure 5****.** When the method shown in **Figure 7** is used for removing data from the ghost table, then operation 707 is performed, and this method is used as part of operation 515 shown in **Figure** 5. The method of **Figure 7** can begin in operation 701 in which a set of hash values is calculated for X. This set of hash values should correspond to the same set of hash values with the same set of hash functions that was previously used in operation 601. Similarly, a signature is calculated for the value of X, which is a similar signature to the signature, which was calculated in operation 601. Then in operation 703, the system looks for the signature value in the locations of the ghost table, which are specified by the set of hash values calculated in operation 701. If the signature is found in operation 705, then the signature of the unit number is removed from the second data structure in operation 707 as shown in **Figure 7****.** In one embodiment, the size of the data structure can be doubled or halved based on the performance of the data structure and the amount of memory available.

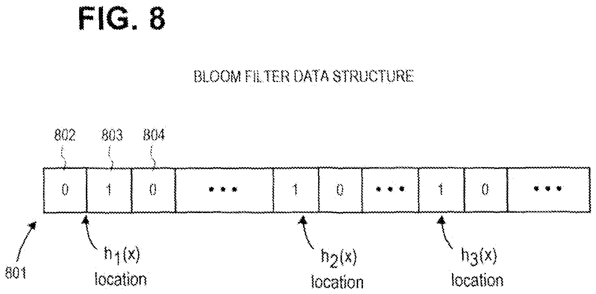

An alternative embodiment of the present invention can employ a Bloom filter rather than the probabilistic hash table, which can be implemented as a ghost table. An example of a Bloom filter is shown in **Figure 8****.** A Bloom filter is a probabilistic data structure that can be used to test whether a unit on the second storage device has probably been recently accessed. The Bloom filter is probabilistic because it is possible that a false positive result is returned, meaning a unit is determined to be within the data structure when it actually is not. However, false negatives are not possible, so a query of the second data structure will return a result that the unit probably has been recently accessed, or that the unit definitely has not been recently accessed. The Bloom filter can have multiple locations corresponding to each unit of the SSD or a proportional number of the units of the SSD. Each location stores either a one or a zero in one embodiment, which indicates the status of the number of accesses of a particular unit on the HDD. Hash values of the unit numbers of the HDD are used as an address to access a particular location in the Bloom filter. As shown in **Figure 8****,** the Bloom filter 801 includes locations 802, 803, and 804. Location 803 is specified by a hash function h1 of X, which specifies that location. The value one has been set in location 803 and has also been set in two other locations specified by two other addresses h2 of X and h3 of X. The Bloom filter shown in **Figure 8** can be used with the method of **Figure 5** by replacing the ghost table with the Bloom filter in operation 507 and by replacing the ghost table with the Bloom filter in operation 509. However, the unit number, in operation 515 is not removed from the Bloom filter when a Bloom filter is used in place of the ghost table because it is not possible to remove a unit from a Bloom filter and ensure that the Bloom filter will not produce false negative results. Accordingly, in one embodiment, as a Bloom filter in the second data structure fills, an additional Bloom filter may be added in a circular queue.

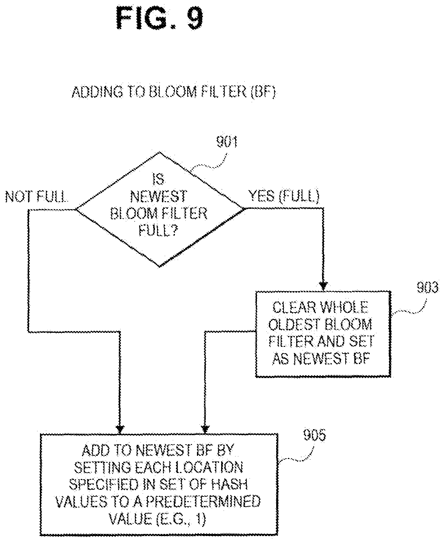

**Figure 9** shows an example of a method for adding a unit in the HDD to the Bloom filter. The operations shown in **Figure 9** are performed in operation 509 when the Bloom filter is used in place of the ghost table. In one embodiment, a circular queue of Bloom filters can be used such that there are multiple Bloom filters maintained in the circular queue where the newest Bloom filter is used to store values and the older Bloom filters circulate through the circular queue as will be apparent from **Figure 9****.** When operation 509 begins, in the case of a Bloom filter implementation of **Figure 5****,** operation 901 determines whether the newest Bloom filter is full. In one embodiment, a counter is used to track the number of times an addition has been made to the Bloom filter, and the filter is considered full after it exceeds some predetermined threshold. If the Bloom filter it is not full, operation 905 follows in which data representing a currently accessed unit on the HDD is added to the newest Bloom filter by setting each location specified in a set of hash values to a predetermined value, such as one. In one embodiment, a set of hash values is calculated as in operation 1001 and each of those hash values specifies a particular location or address within the Bloom filter and a value of one is written into each of those addresses or locations specified in the set of hash values.

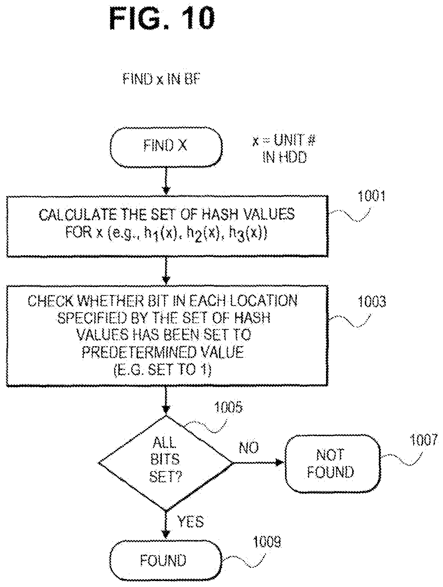

**Figure 10** depicts a method for finding whether a particular unit number in the HDD is in the second data structure, which in this case is the Bloom filter. **Figure 10** can be performed as part of operation 507 when the method of **Figure 5** uses a Bloom filter instead of a ghost table. In operation 1001, the system calculates a set of hash values for the unit number in the HDD. In one embodiment, three different hash functions can be used to calculate three hash values. Then, in operation 1003, the system checks whether a bit, in each location specified by the set of hash values, has been set to a predetermined value, such as the value of one in at least one of the Bloom filters in the queue. In operation 1005, it is determined whether all the bits have been set to one in each of the locations specified by the hash values in the set of hash values. If at least one of the locations in each Bloom filter in the queue has not been set, then the system concludes that the unit has not been found and proceeds to operation 1007, which causes operation 509 to follow in Figure 5. If on the other hand the system determines all bits have been set in the proper locations determined by the set of hash values, then processing proceeds to operation 1009 which causes operation 511 to following in Figure 5. As with the Ghost Table in Figure 4, embodiments of the invention can increase or decrease the size of the second data structure as needed. As Bloom filters in the circular queue fill, additional Bloom filters can be added to the circular queue. After the size of the circular queue of Bloom filters exceeds a defined value, the oldest Bloom filter can be removed from the list.

In the foregoing specification, the invention has been described with reference to specific embodiments thereof. It will, however, be evident that various modifications and changes can be made thereto without departing from the scope of the invention. The specification and drawings are, accordingly, to be regarded in an illustrative rather than a restrictive sense.

## Claims

1. A method for managing access to a multi-device composite data storage system, the method comprising:
managing a first data structure storing data for each unit in a first set of units on a first non-volatile data storage device, wherein for each unit in the first set of units, the data structure includes a value indicating a count of recent accesses and pinned status for the unit and wherein managing the first data structure comprises receiving a request to access a first logical block on the multi-device composite data storage system, accessing the first logical block from a first unit in the first set of units on the first non-volatile data storage device, and updating the count of recent accesses for the first unit; and
managing a second data structure that probabilistically indicates whether a second unit on a second non-volatile data storage device has received at least a predetermined number of recent accesses, wherein the second data structure is a probabilistic hash table and each unit on the first and second non-volatile data storage device includes multiple logical blocks, wherein managing the second data structure comprises receiving a request to access a second logical block on the multi-device composite data storage system, searching the second data structure for the signature of the second unit on the second non-volatile data storage device, the second unit containing the second logical block, and migrating the second unit to the first non-volatile data storage device, and wherein migrating the second unit to the first non-volatile data storage device includes moving the multiple logical blocks contained in the second unit as a single unit, wherein the first data structure and the second data structure are used to manage migration of data between the first non-volatile storage device and the second non-volatile storage device.

2. The method of claim 1 wherein managing the second data structure additionally comprises:
adding, to the second data structure, data representing an identifier of the second unit on the second non-volatile data storage device, the second unit containing a requested logical block of the data storage system.

3. The method of claim 2 wherein adding, to the second data structure, data representing an identifier of the second unit on the second non-volatile data storage device to the second data structure comprises:
calculating a hash of the identifier of the second unit on the second non-volatile data storage system;
calculating a signature for the second unit; and
storing the signature for the second unit into an index on the second data structure, wherein the index is defined by the hash of the second unit.

4. The method of claim 2 wherein migrating the second unit on the second non-volatile data storage device from the second non-volatile data storage device to the first non-volatile data storage device comprises:
moving the unit from the second storage device to the first storage device; and
removing, from the second data structure, the signature of the second unit after moving the multiple logical blocks contained in the second unit.

5. The method of claim 2, wherein adding data representing the identifier of the second unit to the second data structure comprises:
calculating a set of hash values for an address of the second unit;
calculating a signature for the address of the second unit; and
storing the signature of the address of the second unit in the second data structure by using a hash value from the calculated set of hash values as an index.

6. A system for managing access to a composite data storage device, the system comprising:
a first non-volatile data storage device, to store data in a first set of units;
a first data structure, to indicate a recency of access to each unit in the first set of units on the first non-volatile data storage device, wherein the first data structure is a circular queue maintained by use of a clock algorithm, the circular queue to include a value to indicate a pinned status and a count of recent accesses for each unit in the first set of units;
a second non-volatile data storage device, coupled to the first non-volatile data storage device, to store data in a second set of units;
a second data structure, to probabilistically indicate whether a unit in the second set of units has received at least a predetermined number of recent access, wherein the second data structure is a probabilistic hash table to indicate data to migrate to the first non-volatile data storage device and each unit in the first and second set of units includes multiple logical blocks; and
wherein the second data structure is to indicate that the multiple logical blocks of a first unit in the second set of units is to be migrated to the first non-volatile data storage device as a single unit, wherein the first data structure and the second data structure are used to manage migration of data between the first non-volatile storage device and the second non-volatile storage device.

7. The system of claim 6 wherein the first non-volatile data storage device is a solid-state drive and wherein the second non-volatile data storage device is a magnetic hard disk drive.

8. The system of claim 6 wherein the second data structure contains an element corresponding to each of the units on the first non-volatile data storage device.

9. The system of claim 6 wherein the second data structure contains a number of elements corresponding to a proportion of the units on the first non-volatile data storage device and wherein a signature for a unit on the second non-volatile data storage device is stored in the second data structure.

10. The system of claim 6 wherein the first data structure is a circular queue maintained by use of a clock algorithm.

11. The system of claim 10 wherein the first data structure contains an element for each unit on the first non-volatile data storage device.

12. The system of claim 11 wherein an element of the first data structure indicates that a unit on the first non-volatile data storage device is free.

13. A non-transitory machine-readable storage medium having instructions stored therein, which when executed by the system of claim 6, cause the system to perform operations for managing access to a multi-device composite data storage system, the operations comprising:
initializing a first data structure, the first data structure to store a value to indicate a pinned status and a count of recent accesses for each unit in a first set of units on a first non-volatile data storage device is accessed, wherein the first data structure is managed via a clock algorithm;
initializing a second data structure, the second data structure to probabilistically indicate that a unit in a second set of units on a second non-volatile data storage device has received a predetermined number of recent accesses, wherein the second data structure is a probabilistic hash table and each unit in the first and second set of units includes multiple logical blocks;
receiving a request to access a logical block of the multi-device composite data storage system;
accessing a requested logical block from a first unit on the first non-volatile data storage device if the requested logical block is contained on the first non-volatile data storage device, and updating the first data structure to indicate that a logical block of the multi-device composite data storage system was recently accessed from the first unit on the first non-volatile data storage device;
searching the second data structure for an identifier associated with the requested logical block if the requested logical block is not found on the first non-volatile data storage device;
adding an identifier associated with the requested logical block to the second data structure if the identifier associated with the requested logical block is not found in the second data structure;
migrating a second unit containing the requested logical block from the second non-volatile data storage device to the first non-volatile data storage device if the identifier associated with the requested logical block is found in the second data structure, wherein migrating the second unit includes migrating the multiple logical blocks of the second unit in response to the request to access the requested logical block; and
removing the identifier associated with the requested logical block from the second data structure, wherein the first data structure and the second data structure are used to manage migration of data between the first non-volatile storage device and the second non-volatile storage device.

14. The machine-readable storage medium of claim 13 further comprising:
halving the size of the second data structure after a number of signatures are not found within a period of time;
doubling the size of the second data structure after a number of signatures are found within a period of time;
calculating a set of hash values for an address of a requested unit on the second non-volatile data storage device, the requested unit containing the requested logical block, wherein calculating a set of hash values uses a plurality of hash functions;
calculating a signature for the address of the requested unit on the second non-volatile data storage device; and
storing the signature of the address of the requested unit in the second data structure by using a hash value from the calculated set of hash values as an index.

15. The machine-readable storage medium of claim 14, wherein storing the signature of the address of the requested unit in the second data structure comprises:
searching, for each hash function, an index of the second data structure addressed by the hash value calculated by that hash function;
storing the signature of the address of the requested unit in an empty location indexed by hash the value; and
storing the signature of the address of the requested unit in a random location in the second data structure if no hash value in the set of hash values indexes an empty location.

## Patentansprüche

1. Verfahren zum Verwalten des Zugriffs auf ein zusammengesetztes Datenspeichersystem mit mehreren Vorrichtungen, wobei das Verfahren umfasst:
Verwalten einer ersten Datenstruktur, die Daten für jede Einheit in einem ersten Satz von Einheiten auf einer ersten nichtflüchtigen Datenspeichervorrichtung speichert, wobei für jede Einheit in dem ersten Satz von Einheiten die Datenstruktur einen Wert enthält, der eine Zählung jüngster Zugriffe und einen Pinned-Status für die Einheit anzeigt, und wobei ein Verwalten der ersten Datenstruktur ein Empfangen einer Anforderung zum Zugriff auf einen ersten logischen Block auf dem zusammengesetzten Datenspeichersystem mit mehreren Vorrichtungen, ein Zugreifen auf den ersten logischen Block von einer ersten Einheit in dem ersten Satz von Einheiten auf der ersten nichtflüchtigen Datenspeichervorrichtung und ein Aktualisieren der Zählung der jüngsten Zugriffe für die erste Einheit umfasst; und
Verwalten einer zweiten Datenstruktur, die probabilistisch anzeigt, ob eine zweite Einheit auf einer zweiten nichtflüchtigen Datenspeichervorrichtung mindestens eine vorbestimmte Anzahl von kürzlich erfolgten Zugriffen empfangen hat, wobei die zweite Datenstruktur eine probabilistische Hash-Tabelle ist und jede Einheit auf der ersten und zweiten nichtflüchtigen Datenspeichervorrichtung mehrere logische Blöcke enthält, wobei ein Verwalten der zweiten Datenstruktur ein Empfangen einer Anforderung zum Zugriff auf einen zweiten logischen Block auf dem zusammengesetzten Datenspeichersystem mit mehreren Vorrichtungen, ein Durchsuchen der zweiten Datenstruktur nach der Signatur der zweiten Einheit auf der zweiten nichtflüchtigen Datenspeichervorrichtung, wobei die zweite Einheit den zweiten logischen Block enthält, und ein Migrieren der zweiten Einheit zu der ersten nichtflüchtigen Datenspeichervorrichtung umfasst, und wobei das Migrieren der zweiten Einheit zu der ersten nichtflüchtigen Datenspeichervorrichtung ein Bewegen der mehreren logischen Blöcke, die in der zweiten Einheit enthalten sind, als eine einzige Einheit umfasst, wobei die erste Datenstruktur und die zweite Datenstruktur verwendet werden, um die Migration von Daten zwischen der ersten nichtflüchtigen Speichervorrichtung und der zweiten nichtflüchtigen Speichervorrichtung zu verwalten.

2. Verfahren nach Anspruch 1, wobei das Verwalten der zweiten Datenstruktur ferner umfasst:
Hinzufügen, zu der zweiten Datenstruktur, von Daten, die eine Kennung der zweiten Einheit auf der zweiten nichtflüchtigen Datenspeichervorrichtung darstellen, wobei die zweite Einheit einen angeforderten logischen Block des Datenspeichersystems enthält.

3. Verfahren nach Anspruch 2, wobei das Hinzufügen, zu der zweiten Datenstruktur, von Daten, die eine Kennung der zweiten Einheit auf der zweiten nichtflüchtigen Datenspeichervorrichtung darstellen, umfasst:
Berechnen eines Hashes der Kennung der zweiten Einheit auf der zweiten nichtflüchtigen Datenspeichervorrichtung;
Berechnen einer Signatur für die zweite Einheit; und
Speichern der Signatur für die zweite Einheit in einem Index auf der zweiten Datenstruktur, wobei der Index durch den Hash der zweiten Einheit definiert ist.

4. Verfahren nach Anspruch 2, wobei das Migrieren der zweiten Einheit auf der zweiten nichtflüchtigen Datenspeichervorrichtung von der zweiten nichtflüchtigen Datenspeichervorrichtung auf die erste nichtflüchtige Datenspeichervorrichtung umfasst:
Bewegen der Einheit von der zweiten Speichervorrichtung zu der ersten Speichervorrichtung; und
Entfernen der Signatur der zweiten Einheit aus der zweiten Datenstruktur, nachdem die mehreren in der zweiten Einheit enthaltenen logischen Blöcke verschoben wurden.

5. Verfahren nach Anspruch 2, wobei das Hinzufügen von Daten, die die Kennung der zweiten Einheit darstellen, zu der zweiten Datenstruktur umfasst:
Berechnen eines Satzes von Hash-Werten für eine Adresse der zweiten Einheit;
Berechnen einer Signatur für die Adresse der zweiten Einheit; und
Speichern der Signatur der Adresse der zweiten Einheit in der zweiten Datenstruktur durch Verwendung eines Hash-Wertes aus dem berechneten Satz von Hash-Werten als Index.

6. System zur Verwaltung des Zugriffs auf eine zusammengesetzte Datenspeichervorrichtung, wobei das System Folgendes umfasst:
eine erste nichtflüchtige Datenspeichervorrichtung, um Daten in einem ersten Satz von Einheiten zu speichern;
eine erste Datenstruktur, um eine Neuheit eines Zugriffs auf jede Einheit in dem ersten Satz von Einheiten auf der ersten nichtflüchtigen Datenspeichervorrichtung anzuzeigen, wobei die erste Datenstruktur eine zirkuläre Warteschlange ist, die unter Verwendung eines Taktalgorithmus aufrechterhalten wird, wobei die zirkuläre Warteschlange einen Wert zur Anzeige eines Pinned-Status und eine Zählung jüngster Zugriffe für jede Einheit in dem ersten Satz von Einheiten enthält;
eine zweite nichtflüchtige Datenspeichervorrichtung, die mit der ersten nichtflüchtigen Datenspeichervorrichtung gekoppelt ist, um Daten in einem zweiten Satz von Einheiten zu speichern;
eine zweite Datenstruktur, um probabilistisch anzuzeigen, ob eine Einheit in dem zweiten Satz von Einheiten mindestens eine vorbestimmte Anzahl von kürzlich erfolgten Zugriffen empfangen hat, wobei die zweite Datenstruktur eine probabilistische Hashtabelle ist, um Daten anzuzeigen, die zu der ersten nichtflüchtigen Datenspeichervorrichtung migrieren sollen, und jede Einheit in dem ersten und zweiten Satz von Einheiten mehrere logische Blöcke enthält; und
wobei die zweite Datenstruktur vorgesehen ist zum Anzeigen, dass die mehreren logischen Blöcke einer ersten Einheit in dem zweiten Satz von Einheiten als eine einzige Einheit zu der ersten nichtflüchtigen Datenspeichervorrichtung zu migrieren sind, wobei die erste Datenstruktur und die zweite Datenstruktur verwendet werden, um die Migration von Daten zwischen der ersten nichtflüchtigen Speichervorrichtung und der zweiten nichtflüchtigen Speichervorrichtung zu verwalten.

7. System nach Anspruch 6, wobei die erste nichtflüchtige Datenspeichervorrichtung ein Festkörperlaufwerk ist und wobei die zweite nichtflüchtige Datenspeichervorrichtung ein magnetisches Festplattenlaufwerk ist.

8. System nach Anspruch 6, wobei die zweite Datenstruktur ein Element enthält, das jeder der Einheiten auf der ersten nichtflüchtigen Datenspeichervorrichtung entspricht.

9. System nach Anspruch 6, wobei die zweite Datenstruktur eine Anzahl von Elementen enthält, die einem Anteil der Einheiten auf der ersten nichtflüchtigen Datenspeichervorrichtung entspricht, und wobei eine Signatur für eine Einheit auf der zweiten nichtflüchtigen Datenspeichervorrichtung in der zweiten Datenstruktur gespeichert ist.

10. System nach Anspruch 6, wobei die erste Datenstruktur eine zirkuläre Warteschlange ist, die durch die Verwendung eines Taktalgorithmus aufrechterhalten wird.

11. System nach Anspruch 10, wobei die erste Datenstruktur ein Element für jede Einheit auf der ersten nichtflüchtigen Datenspeichervorrichtung enthält.

12. System nach Anspruch 11, wobei ein Element der ersten Datenstruktur anzeigt, dass eine Einheit auf der ersten nichtflüchtigen Datenspeichervorrichtung frei ist.

13. Nicht-flüchtiges, maschinenlesbares Speichermedium mit darin gespeicherten Anweisungen, die, wenn sie von dem System nach Anspruch 6 ausgeführt werden, das System veranlassen, Operationen zur Verwaltung des Zugriffs auf ein zusammengesetztes Datenspeichersystem mit mehreren Vorrichtungen durchzuführen, wobei die Operationen umfassen:
Initialisieren einer ersten Datenstruktur, die vorgesehen ist zum Speichern eines Werts zur Anzeige eines Pinned-Status und einer Zählung jüngster Zugriffe für jede Einheit in einem ersten Satz von Einheiten auf einer ersten nichtflüchtigen Datenspeichervorrichtung, wobei die erste Datenstruktur über einen Taktalgorithmus verwaltet wird;
Initialisieren einer zweiten Datenstruktur, wobei die zweite Datenstruktur probabilistisch anzeigt, dass eine Einheit in einem zweiten Satz von Einheiten auf einer zweiten nichtflüchtigen Datenspeichervorrichtung eine vorbestimmte Anzahl von kürzlichen Zugriffen empfangen hat, wobei die zweite Datenstruktur eine probabilistische Hash-Tabelle ist und jede Einheit in dem ersten und zweiten Satz von Einheiten mehrere logische Blöcke enthält;
Empfangen einer Anforderung für einen Zugriff auf einen logischen Block des zusammengesetzten Datenspeichersystems mit mehreren Vorrichtungen;
Zugreifen auf einen angeforderten logischen Block von einer ersten Einheit auf der ersten nichtflüchtigen Datenspeichervorrichtung, wenn der angeforderte logische Block auf der ersten nichtflüchtigen Datenspeichervorrichtung enthalten ist, und Aktualisieren der ersten Datenstruktur, um anzuzeigen, dass auf einen logischen Block des zusammengesetzten Datenspeichersystems mit mehreren Vorrichtungen kürzlich von der ersten Einheit auf der ersten nichtflüchtigen Datenspeichervorrichtung zugegriffen wurde;
Durchsuchen der zweiten Datenstruktur nach einer Kennung, die dem angeforderten logischen Block zugeordnet ist, wenn der angeforderte logische Block nicht auf der ersten nichtflüchtigen Datenspeichervorrichtung gefunden wird;
Hinzufügen einer mit dem angeforderten logischen Block verknüpften Kennung zu der zweiten Datenstruktur, wenn die mit dem angeforderten logischen Block verknüpfte Kennung in der zweiten Datenstruktur nicht gefunden wird;
Migrieren einer zweiten Einheit, die den angeforderten logischen Block enthält, von der zweiten nichtflüchtigen Datenspeichervorrichtung zu der ersten nichtflüchtigen Datenspeichervorrichtung, wenn die dem angeforderten logischen Block zugeordnete Kennung in der zweiten Datenstruktur gefunden wird, wobei das Migrieren der zweiten Einheit ein Migrieren der mehreren logischen Blöcke der zweiten Einheit als Reaktion auf die Anforderung, auf den angeforderten logischen Block zuzugreifen, einschließt; und
Entfernen der Kennung, die dem angeforderten logischen Block zugeordnet ist, aus der zweiten Datenstruktur, wobei die erste Datenstruktur und die zweite Datenstruktur verwendet werden, um die Migration von Daten zwischen der ersten nichtflüchtigen Speichervorrichtung und der zweiten nichtflüchtigen Speichervorrichtung zu verwalten.

14. Maschinenlesbare Speichermedium nach Anspruch 13, ferner umfassend:
Halbieren der Größe der zweiten Datenstruktur, nachdem eine Anzahl von Signaturen innerhalb einer bestimmten Zeitspanne nicht gefunden wurden;
Verdoppeln der Größe der zweiten Datenstruktur, nachdem eine Anzahl von Signaturen innerhalb einer bestimmten Zeitspanne gefunden wurde;
Berechnen eines Satzes von Hash-Werten für eine Adresse einer angeforderten Einheit auf der zweiten nichtflüchtigen Datenspeichervorrichtung, wobei die angeforderte Einheit den angeforderten logischen Block enthält, wobei das Berechnen eines Satzes von Hash-Werten eine Vielzahl von Hash-Funktionen verwendet;
Berechnen einer Signatur für die Adresse der angeforderten Einheit auf der zweiten nichtflüchtigen Datenspeichervorrichtung; und
Speichern der Signatur der Adresse der angeforderten Einheit in der zweiten Datenstruktur unter Verwendung eines Hash-Wertes aus dem berechneten Satz von Hash-Werten als Index.

15. Maschinenlesbare Speichermedium nach Anspruch 14, wobei das Speichern der Signatur der Adresse der angeforderten Einheit in der zweiten Datenstruktur umfasst:
Suchen, für jede Hash-Funktion, eines Indexes der zweiten Datenstruktur, die durch den von dieser Hash-Funktion berechneten Hash-Wert adressiert wird;
Speichern der Signatur der Adresse der angeforderten Einheit an einem leeren, durch den Hash-Wert indizierten Ort; und
Speichern der Signatur der Adresse der angeforderten Einheit an einer zufälligen Stelle in der zweiten Datenstruktur, wenn kein Hash-Wert in der Menge der Hash-Werte eine leere Stelle indiziert.

## Revendications

1. Un procédé de gestion de l'accès à un système de stockage de données composite multi-dispositif, le procédé comprenant :
la gestion d'une première structure de données stockant des données pour chaque unité d'un premier ensemble de données sur un premier dispositif de stockage non volatil de données, où, pour chaque unité du premier ensemble d'unités, la structure de données comprend une valeur indiquant un compte d'accès récents et un statut attaché pour l'unité, et où la gestion de la première structure de données comprend la réception d'une requête d'accès à un premier bloc logique sur le système de stockage de données composite multi-dispositif, l'accès au premier bloc logique depuis une première unité du premier ensemble d'unités sur le premier dispositif de stockage non volatil de données, et la mise à jour du compte d'accès récents pour la première unité ; et
la gestion d'une seconde structure de données qui indique de manière probabiliste si une seconde unité sur un second dispositif de stockage non volatil de données a ou non reçu un nombre prédéterminé d'accès récents, où la seconde structure de données est une table de hachage probabiliste et chaque unité sur le premier et le second dispositif de stockage non volatil de données comprend des blocs logiques multiples, où la gestion de la seconde structure de données comprend la réception d'une requête d'accès à un second bloc logique sur le système de stockage de données composite multi-dispositif, la recherche dans la seconde structure de données de la signature de la seconde unité sur le second dispositif de stockage non volatil de données, la seconde unité contenant le second bloc logique, et la migration de la seconde unité vers le second dispositif de stockage non volatil de données, et où la migration de la seconde unité vers le premier dispositif de stockage non volatil de données comprend le déplacement des blocs logiques multiples contenus dans la seconde unité en une unité unique, la première structure de données et la seconde structure de données étant utilisées pour gérer la migration des données entre le premier dispositif de stockage non volatil et le second dispositif de stockage non volatil.

2. Le procédé de la revendication 1 dans lequel la gestion de la seconde structure de données comprend en outre :
l'ajout, à la seconde structure de données, de données représentant un identifiant de la seconde unité sur le second dispositif de stockage non volatil de données, la seconde unité contenant un bloc logique requis du système de stockage de données.

3. Le procédé de la revendication 2 dans lequel l'ajout à la seconde structure de données de données représentant un identifiant de la seconde unité sur le second dispositif de stockage non volatil de données comprend :
le calcul d'un hachage de l'identifiant de la seconde unité sur le second système de stockage non volatil de données ;
le calcul d'une signature pour la seconde unité ; et
le stockage de la signature pour la seconde unité dans un index sur la seconde structure de données, l'index étant défini par le hachage de la seconde unité.

4. Le procédé de la revendication 2, dans lequel la migration de la seconde unité sur le second dispositif de stockage non volatil de données du second dispositif de stockage non volatil de données vers le premier dispositif de stockage non volatil de données comprend :
le déplacement de l'unité du second dispositif de stockage vers le premier dispositif de stockage ; et
le retrait, de la seconde structure de données, de la signature de la seconde unité après déplacement des blocs logiques multiples contenus dans la seconde unité.

5. Le procédé de la revendication 2, dans lequel l'ajout à la seconde structure de données de données représentant l'identifiant de la seconde unité comprend :
le calcul d'un ensemble de valeurs de hachage pour une adresse de la seconde unité ;
le calcul d'une signature pour l'adresse de la seconde unité ; et
le stockage de la signature de l'adresse de la seconde unité dans la seconde structure de données en utilisant en tant qu'index une valeur de hachage provenant de l'ensemble calculé de valeurs de hachage.

6. Un système de gestion d'accès à un dispositif de stockage de données composite, le système comprenant :
un premier dispositif de stockage non volatil de données, pour le stockage de données dans un premier ensemble d'unités ;
une première structure de données, pour indiquer un caractère plus ou moins récent de l'accès à chaque unité du premier ensemble de données sur le premier dispositif de stockage non volatil de données, la première structure de données étant une file d'attente circulaire entretenue à l'aide d'un algorithme d'horloge, la file d'attente circulaire servant à inclure une valeur pour indiquer un statut attaché et un compte d'accès récents pour chaque unité du premier ensemble d'unités ;
un second dispositif de stockage non volatil de données, couplé au premier dispositif de stockage non volatil de données, pour stocker des données dans un second ensemble d'unités ;
une seconde structure de données, pour indiquer de manière probabiliste si une unité du second ensemble d'unités a ou non reçu au moins un nombre prédéterminé d'accès récents, la seconde structure de données étant une table de hachage probabiliste destinée à indiquer des données à migrer vers le premier dispositif de stockage non volatil de données et chaque unité du premier et du second ensemble d'unités comprenant des blocs logiques multiples ; et
dans lequel la seconde structure de données sert à indiquer que les blocs logiques multiples d'une première unité du second ensemble d'unités doivent être migrés vers le premier dispositif de stockage non volatil de données sous forme d'une unité unique, dans lequel la première structure de données et la seconde structure de données sont utilisées pour gérer la migration des données entre le premier dispositif de stockage non volatil et le second dispositif de stockage non volatil.

7. Le système de la revendication 6 dans lequel le dispositif de stockage non volatil de données est un disque statique et dans lequel le second dispositif de stockage non volatil de données est un disque dur magnétique.

8. Le système de la revendication 6 dans lequel la seconde structure de données contient un élément correspondant à chacune des unités du premier dispositif de stockage non volatil de données.

9. Le système de la revendication 6 dans lequel la seconde structure de données contient un nombre d'éléments correspondant à une proportion des unités sur le premier dispositif de stockage non volatil de données et dans lequel une signature pour une unité sur le second dispositif de stockage non volatil de données est stockée dans la seconde structure de données.

10. Le système de la revendication 6 dans lequel la première structure de données est une file d'attente circulaire entretenue à l'aide d'un algorithme d'horloge.

11. Le système de la revendication 10 dans lequel la première structure de données contient un élément pour chaque unité sur le premier dispositif de stockage non volatil de données.

12. Le système de la revendication 11 dans lequel un élément de la première structure de données indique qu'une unité est libre sur le premier dispositif de stockage non volatil de données.

13. Un support de stockage non transitoire lisible par machine dans lequel sont stockées des instructions qui, lorsqu'elles sont exécutées par le système de la revendication 6, font en sorte que le système effectue des opérations pour la gestion de l'accès à un dispositif de stockage de données composite multi-dispositif, les opérations comprenant :
l'initialisation d'une première structure de données, la première structure de données servant à stocker une valeur destinée à indiquer un statut attaché et un compte d'accès récents pour chaque unité d'un premier ensemble d'unités sur un premier dispositif de stockage non volatil de données qui a été accédée, la première structure de données étant gérée via un algorithme d'horloge ;
l'initialisation d'une seconde structure de données, la seconde structure de données étant destinée à indiquer de manière probabiliste qu'une unité d'un second ensemble d'unités sur un second dispositif de stockage non volatil de données a reçu un nombre prédéterminé d'accès récents, la seconde structure de données étant une table de hachage probabiliste et chaque unité du premier et du second ensemble d'unités comprenant des blocs logiques multiples ;
la réception d'une requête d'accès à un bloc logique du système de stockage de données composite multi-dispositif ;
l'accès à un bloc logique requis depuis une première unité sur le premier dispositif de stockage non volatil de données si le bloc logique requis est contenu sur le premier dispositif de stockage non volatil de données, et la mise à jour de la première structure de données pour indiquer qu'un bloc logique du système de stockage de données composite multi-dispositif a été récemment accédée depuis la première unité sur le premier dispositif de stockage non volatil de données ;
la recherche dans la seconde structure de données d'un identifiant associé au bloc logique requis si le bloc logique requis n'est pas trouvé sur le premier dispositif de stockage non volatil de données ;
l'ajout d'un identifiant associé au bloc logique requis à la seconde structure de données si l'identifiant associé au bloc logique requis n'est pas trouvé dans la seconde structure de données ;
la migration d'une seconde unité contenant le bloc logique requis du second dispositif de stockage non volatil de données vers le premier dispositif de stockage non volatil de données si l'identifiant associé au bloc logique requis est trouvé dans la seconde structure de données, la migration de la seconde unité comprenant la migration des blocs logiques multiples de la seconde unité en réponse à la requête d'accès au bloc logique requis ; et
le retrait, de la seconde structure de données, de l'identifiant associé au bloc logique requis, la première structure de données et la seconde structure de données étant utilisées pour gérer la migration des données entre le premier dispositif de stockage non volatil et le second dispositif de stockage non volatil.

14. Le support de stockage lisible par machine de la revendication 13 comprenant en outre :
la réduction de moitié de la dimension de la seconde structure de données après qu'un certain nombre de signatures n'ont pas été retrouvées dans les limites d'un laps de temps ;
le doublement de la dimension de la seconde structure de données après qu'un certain nombre de signatures ont été trouvées dans les limites d'un laps de temps ;
le calcul d'un ensemble de valeurs de hachage pour une adresse d'une unité requise sur le second dispositif de stockage non volatil de données, l'unité requise contenant le bloc logique requis, le calcul d'un ensemble de valeurs de hachage utilisant une pluralité de fonctions de hachage ;
le calcul d'une signature pour l'adresse de l'unité requise sur le second dispositif de stockage non volatil de données ; et
le stockage de la signature de l'adresse de l'unité requise dans la seconde structure de données par utilisation en tant qu'index d'une valeur de hachage venant de l'ensemble calculé de valeurs de hachage.

15. Le support de stockage lisible par machine de la revendication 14, dans lequel le stockage de la signature de l'adresse de l'unité requise dans la seconde structure de données comprend :
la recherche, pour chaque fonction de hachage, d'un index de la seconde structure de données adressée par la valeur de hachage calculée par cette fonction de hachage ;
le stockage de la signature de l'adresse de l'unité requise dans un emplacement vide indexé par hachage de la valeur ; et
le stockage de la signature de l'adresse de l'unité requise dans un emplacement aléatoire de la seconde structure de données si aucune valeur de hachage de l'ensemble des valeurs de hachage n'indexe un emplacement vide.
